# EUROPEAN PATENT APPLICATION

(11) **EP 4 663 434 A1**
(43) Date of publication of application: **17.12.2025**
(21) Application number: 24182348.3
(22) Date of filing: 14.06.2024
(51) Int. Cl.: B60C 27/18

(54) **ANTI-SKID DEVICE FOR ROAD VEHICLES**

(71) Applicant: Carpa Design Europe, S.L, 46005 Valencia (ES)
(72) Inventor: MENDOZA LANDI, Guillermo, Valencia (ES); ROSSI, Federico, Torino (IT)
(74) Representative: Bruni, Giovanni

(57) **Abstract**

*Anti-skid device (100) for road vehicles suitable for being mounted on a car tyre comprising a main band (1) suitable for wrapping at least the entire tread of a vehicle tyre (7), the main band (1) comprising a fabric band (5) on the side facing the vehicle and an elastic band (6) and on the opposite vehicle side a net (2), at least one pair of belts (4) being the fabric band (5), the elastic band (6) and the net (2) firmly attached to the main band (1), said device (100) being characterized by the fact that the belts (4) are sewn with a "sandwich" structure on the main band (1), that is an end of the main band (1), an end of a belt (4), an end of the net (2) and a portion of a closing fabric (3), which is positioned further outside the main band (1), are sewn together.*

## Description

### Technical field of the invention

The present invention relates to an innovative anti-skid device for road vehicles, particularly suitable for being applied to a car wheel to increase friction between the wheel and the road surface in winter conditions.

### Background art

As is known, anti-skid devices for vehicles, also called snow socks, are anti-slip devices that are mounted on the driving wheels of cars to improve grip on icy or snowy roads. They are an alternative to traditional snow chains and are designed to offer greater traction on slippery surfaces during winter conditions. These socks, made of resistant and elastic materials such as nylon or other synthetic fibers, can be adapted to different tyre sizes. They are generally placed around the tyre as an additional cover, thus improving grip on snowy or icy roads.

It should be noted that the use of snow socks is regulated by law and may vary from state to state. To ensure maximum safety, it is essential to purchase snow socks that comply with European regulations, i.e. with the relevant approval.

The demand for such anti-skid devices has therefore increased on the market as well as the search for greater performance on the part of the latter in terms of safety as well as greater ease of assembly/disassembly from the tyre.

There is therefore a need to define an innovative anti-skid device for road vehicles that minimizes the above-mentioned inconveniences.

### Summary of the invention

The present invention proposes a way to solve the technical problems previously highlighted and therefore an object of the present invention is to define an innovative anti-skid device for road vehicles.

According to the present invention, the anti-skid device can be easily mounted and removed from the tyre of a vehicle.

Therefore, according to the present invention, an anti-skid device is described having the characteristics set out in the independent product claim, attached to the present description.

Further embodiments of the invention, preferred and/or particularly advantageous, are described according to the characteristics set out in the attached dependent claims.

### Brief description of the drawings

The invention will now be described with reference to the attached drawings, which illustrate some non-limiting implementation examples, in which:
- figure 1 is a first overall perspective view of the anti-skid device of the second embodiment of the present invention,
- figure 2 is a second overall perspective view of the anti-skid device in figure 1,
- figure 3 is a detail of a portion of the anti-skid device of figure 1,
- figure 4 is a cross section of the detail in figure 3,
- figure 4a is an enlargement of the detail in figure 4,
- figure 5 is a top view of the anti-skid device mounted on a tyre,
- figure 6 is a cross section of the anti-skid device applied to a tyre,
- figure 6a is a transverse view of the anti-skid device applied to a tyre, e
- figure 6b is a detail of a portion of the anti-skid device of figure 6.

### Detailed description

By way of purely illustrative and non-limiting example, the present invention will now be described with reference to the aforementioned figures.

An anti-skid device 100 for road vehicles, suitable for being mounted on a car tyre to increase friction on the road surface in winter conditions. The device consists of a main band 1, highly resistant to abrasion, which wraps the entire tread of a tyre 7 and portions of fabric sewn to it to keep it in a well-defined position around the wheel of the vehicle, avoiding its loss or incorrect positioning during use compromising its function.

Advantageously, the main band 1 is a nylon fabric made of highly abrasion-resistant threads.

The main band 1 wraps the entire tread until it covers at least 10% of the surface of both sides of the tyre 7 of a vehicle.

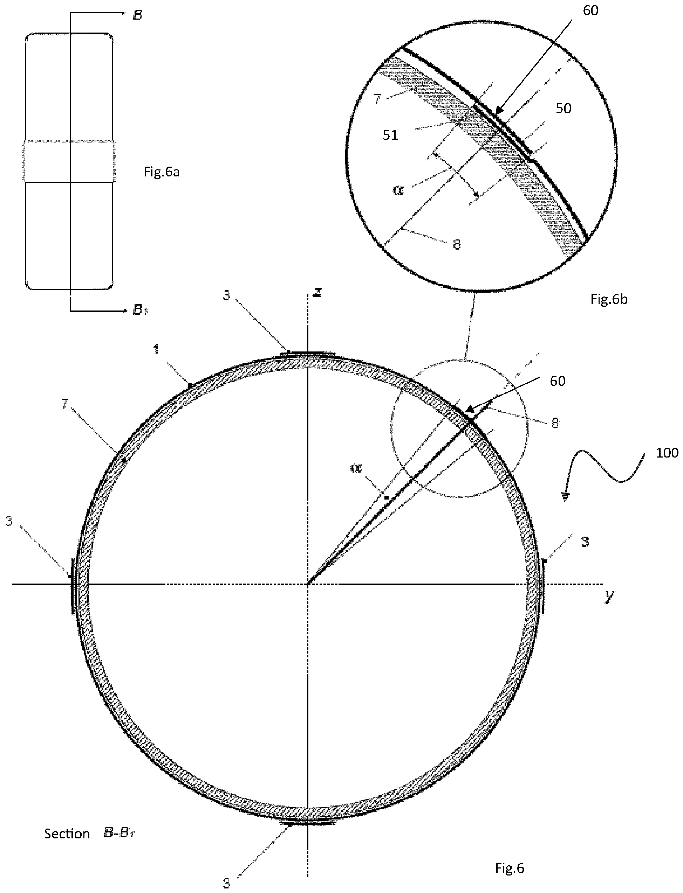

As shown in figure 6, the main band 1 comprises a single strip of fabric and its two final ends 50, 51 of the main band are superimposed on each other and sewn in an overlap zone 60 between them along the entire cross section of the band. The overlap zone 60 occupies at least an angle α equal to 10° of the entire circumference of the wheel (figure 6b). In particular, the seam to close the main band 1 is placed in correspondence with the bisector 8 of the first quadrant of the circumference.

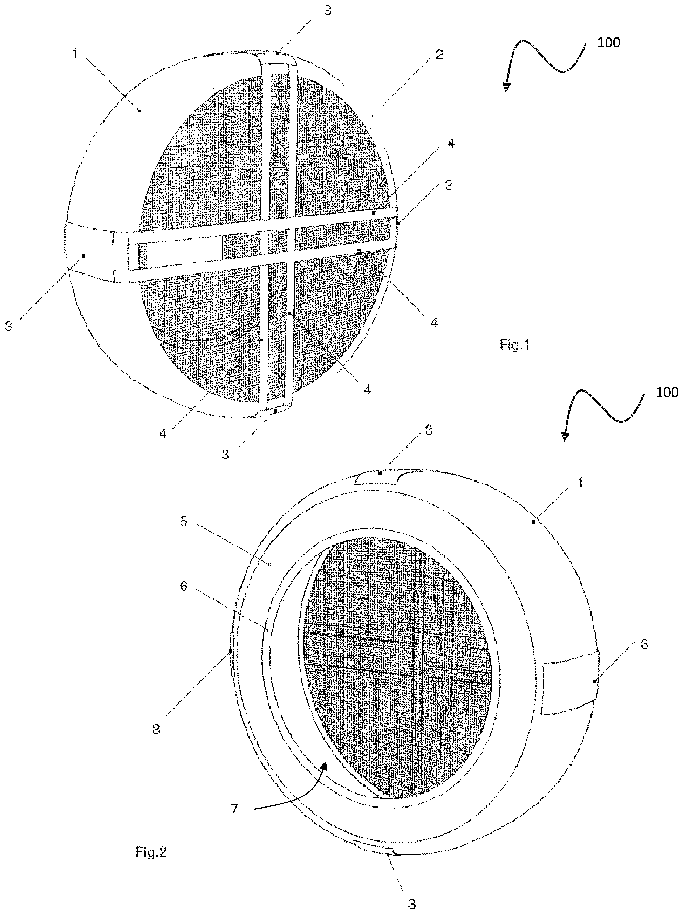

Furthermore, on the external side of the device 100 or on the main band 1 (figure 1 and figure 2) a net 2 also made of nylon is sewn. Net 2 is configured so as to completely occlude the external side (i.e. the side opposite to the vehicle) of the wheel, thus limiting the entry of solid materials such as snow, mud and gravel, preventing them from settling on the vehicle rim. The net 2 also has the function of tightening the device on the wheel on the external side, reducing slipping between the main band 1 and the tread of the tyre 7.

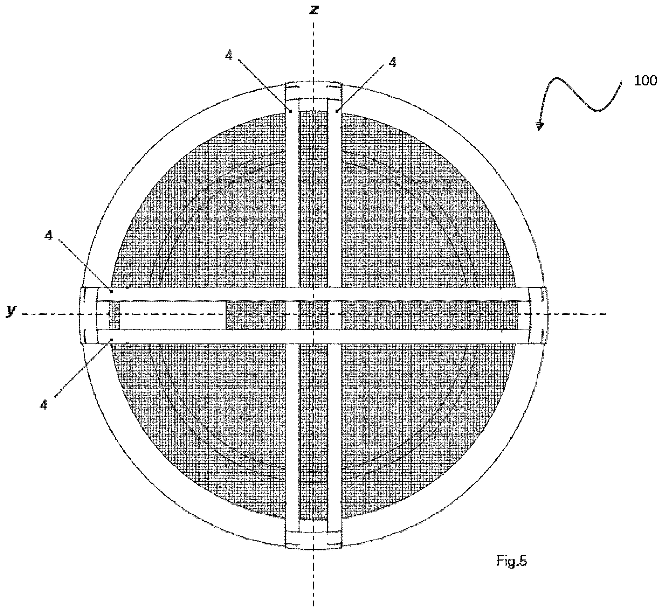

Furthermore, as shown in figure 5, on the external side of the device 100 above the net 2, there is at least one pair of belts 4 also made of nylon. The belts 4 are advantageously four in number to give greater strength to the device 100. In particular, the belts 4 are arranged in pairs along the y and z axes passing through the center of the device 100 and at 90° to each other, i.e. perpendicular. The belts 4 that form the single pair are parallel to each other and spaced approximately 3-5 cm apart, preferably at a distance equal to 3.9 cm.

Advantageously, the belts 4 also have the function of facilitating the centering of the device during assembly on the tyre 7.

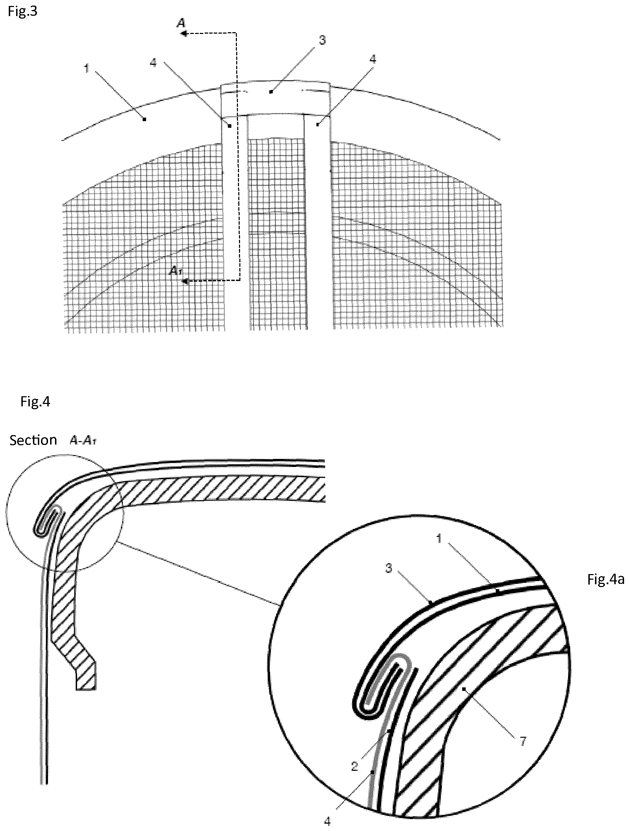

As illustrated in figure 4 and in the detail of figure 4a, to obtain a more secure attachment to the main band 1, the belts 4 are sewn in a "sandwich" fashion. This "sandwich" seam includes: an end of the main band 1, a portion of closing fabric 3, an end of a belt 4 and an end of the net 2.

Advantageously, in the device 100 object of the present invention there are four "sandwich" seams, each corresponding to a portion of closing fabric 3.

Advantageously, the overlap zone 60 of the main band 1 is therefore not located in correspondence with any of the "sandwich" seams, but is included in a space between two contiguous "sandwich" seams. This choice is given by the fact that we do not want to further thicken one of the "sandwich" seams, thus making it thicker and weaker than the others.

As illustrated by the attached figures, at the ends of the two pairs of belts 4 and therefore of the relative four seams there are four closure portions 3 made of fabric on the main band 1, arranged transversally along the entire main band 1.

The four closure portions 3 are also made of a highly abrasion-resistant nylon fabric. Said portions 3 are sewn to the main band perpendicular to the direction of travel to help ensure greater grip on the road surface.

On the internal side (the one facing the vehicle) of the device (figure 2) there is a fabric band 5, also preferably made of nylon, in which one of its first long sides is sewn onto the external surface of the main band 1 and to an elastic band 6 is sewn onto its second long side. The elastic band 6 has the function of keeping the device 100 tensioned on the internal side of the tyre 7.

Advantageously, the anti-skid device 100 object of the present invention is therefore configured to be easily mounted and dismounted on the tyre thanks to the presence of the elastic band 6.

Advantageously, the anti-skid device 100 object of the present invention is configured to be kept stably on the tyre thanks to the fabric band 5.

In addition to the ways of implementing the invention, as described above, it should be understood that numerous further variations exist. It must also be understood that said ways of implementation are only exemplary and do not limit neither the object of the invention, nor its applications, nor its possible configurations. On the contrary, although the above description makes it possible for the skilled man to implement the present invention at least according to one of its exemplary configurations, it must be understood that numerous variations of the described components are conceivable, without thereby departing from the obj ect of the invention, as defined in the attached claims.

## Claims

1. Anti-skid device (100) for road vehicles suitable for being mounted on a car tyre comprising a main band (1) suitable for wrapping at least the entire tread of a vehicle tyre (7), the main band (1) comprising a fabric band (5) on the side facing the vehicle and an elastic band (6) and on the opposite vehicle side a net (2), at least one pair of belts (4) being the fabric band (5), the elastic band (6) and the net (2) firmly attached to the main band (1), said device (100) being **characterized by** the fact that the belts (4) are sewn with a "sandwich" structure on the main band (1), that is an end of the main band (1), an end of a belt (4), an end of the net (2) and a portion of a closing fabric (3), which is positioned further outside the main band (1), are sewn together.

2. Device (100) according to claim 1, wherein the at least one pair of belts (4) is equal to two in number and each pair is arranged along the axes (y, z) passing through the center of the device (100) and positioned at 90° to each other.

3. Device (100) according to claim 1 or 2, wherein the belts of the at least one pair of belts (4) are spaced apart by approximately 3-5 cm.

4. Device (100) according to one of the previous claims, wherein the main band (1) covers at least 10% of both sides of the tyre (7) of a vehicle.

5. Device (100) according to one of the previous claims, wherein the main band (1) comprises two ends which are steadily connected in an overlap zone (60), said overlap zone (60) occupying at least an angle (α) equal to 10° of the entire the circumference of the tyre.

6. Device (100) according to claim 5, wherein the overlap zone (60) is placed in correspondence with a bisector (8) of the first quadrant of the tyre (7) circumference.

7. Device (100) according to one of the previous claims, wherein the main band (1), the belt (4), the net (2) and the closing fabric (3) are made of nylon formed by threads with high resistance to abrasion.
